(19) Europäisches Patentamt
European Patent Office
Office européen des brevets

(11) **EP 4 217 811 B1**

(12) **EUROPÄISCHE PATENTSCHRIFT**

(45) Veröffentlichungstag und Bekanntmachung des Hinweises auf die Patenterteilung:
**05.11.2025 Patentblatt 2025/45**

(21) Anmeldenummer: **21772764.3**

(22) Anmeldetag: **01.09.2021**

(51) Internationale Patentklassifikation (IPC):
***G05D 1/00*** *(2024.01)*

(52) Gemeinsame Patentklassifikation (CPC):
**G05D 1/0217; G05D 1/0221; G06N 3/08; G06N 3/09; G06N 3/092; G06N 7/01; B60W 60/001; B60W 2556/45; B60W 2756/10; G01C 21/3407**

(86) Internationale Anmeldenummer:
**PCT/EP2021/074190**

(87) Internationale Veröffentlichungsnummer:
**WO 2022/063537 (31.03.2022 Gazette 2022/13)**

(54) **VERFAHREN UND VORRICHTUNG ZUM UNTERSTÜTZEN EINER MANÖVERPLANUNG FÜR EIN ZUMINDEST TEILAUTOMATISIERT FAHRENDES FAHRZEUG ODER EINEN ROBOTER**

METHOD AND DEVICE FOR SUPPORTING MANEUVER PLANNING FOR AN AT LEAST SEMI-AUTOMATED VEHICLE OR A ROBOT

PROCEDE ET DISPOSITIF D'APPUI A LA PLANIFICATION DE MANOEUVRE POUR UN VEHICULE AU MOINS SEMI-AUTOMATISE OU UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2020 DE 102020212074**

(43) Veröffentlichungstag der Anmeldung:
**02.08.2023 Patentblatt 2023/31**

(73) Patentinhaber: **VOLKSWAGEN AKTIENGESELLSCHAFT 38440 Wolfsburg (DE)**

(72) Erfinder:
• **HELBIG, Micha 38100 Braunschweig (DE)**
• **HOEDT, Jens 30161 Hannover (DE)**

(56) Entgegenhaltungen:
| | |
|---|---|
| CN-A- 110 288 835 | CN-A- 110 562 239 |
| DE-U1- 202019 103 233 | US-A1- 2013 318 023 |
| US-A1- 2020 086 863 | US-A1- 2020 150 672 |

**Beschreibung**

Die Erfindung betrifft ein Verfahren und eine Vorrichtung zum Unterstützen einer Manöverplanung für ein zumindest teilautomatisiert fahrendes Fahrzeug oder einen Roboter.

In automatisiert fahrenden Fahrzeugen ist neben einer Trajektorienplanung, das heißt einem Bereitstellen einer in einer aktuellen Situation konkret abzufahrenden Trajektorie, im Rahmen einer Manöverplanung eine taktische Manöverplanung notwendig, um eine übergeordnete Strategie zu verwirklichen. Ein konkretes Beispiel hierfür ist eine Abbiegesituation mit mehreren Spuren und vielen anderen Verkehrsteilnehmern. Es muss dann entschieden werden, wann das Fahrzeug in welcher Fahrspur sein muss, um beispielsweise möglichst komfortabel für die Insassen und/oder möglichst zeitoptimal einen Abbiegevorgang durchzuführen, und welche anderen Verkehrsteilnehmer hierzu überholt werden müssen. Die vom Prinzip her gleiche Problemstellung ergibt sich auch für automatisiert handelnde Roboter.

Es sind Reinforcement-Learning-Verfahren bekannt, mit deren Hilfe ein Verhalten der anderen Verkehrsteilnehmer angelernt und basierend hierauf eine optimale Entscheidung getroffen werden kann. Hierbei wird eine Abbildung (engl. mapping) gelernt zwischen einem Zustand und einer hiermit korrespondierenden optimalen Aktion in Bezug auf eine Zielsetzung, die über eine Belohnungswert (engl. reward) ausgedrückt wird. Anders ausgedrückt versucht der Reinforcement Learning Agent die Aktion zu finden, die den Belohnungswert maximiert. Um eine optimale Lösung zu finden, muss ein Reinforcement Learning Agent ein Umfeld gründlich untersuchen, um sicherzustellen, dass eine optimale Lösung nicht übersehen wird. Andererseits kann der Agent bereits zu einem früheren Zeitpunkt erfahrene Situationen ausnutzen, in denen der Agent eine gute Lösung mit einem entsprechend hohen Belohnungswert gefunden hat.

Ferner sind Markow-Entscheidungsprobleme und Verfahren der Dynamischen Programmierung bekannt.

Aus der US 2020/0086863 A1 sind Systeme und Verfahren bekannt, die sich auf das Modellieren dynamischer Agenten in einer Umgebung eines Ego-Fahrzeugs beziehen. In einer Ausführungsform umfasst das Verfahren als Reaktion auf das Empfangen von Sensordaten, die gegenwärtige Beobachtungen eines Straßenagenten der dynamischen Agenten in der Umgebung umfassen, das Identifizieren früherer Beobachtungen des Straßenagenten aus einem elektronischen Datenspeicher. Das Verfahren umfasst das Schätzen eines zukünftigen Zustands des Straßenagenten unter Verwendung zumindest der gegenwärtigen Beobachtungen und der vorherigen Beobachtungen des Straßenagenten, um den zukünftigen Zustand gemäß einem Wahrscheinlichkeitsmodell zu berechnen, das aus einem Übergangsmodell besteht, das dynamische Verhaltensweisen des Straßenagenten berücksichtigt, um Übergänge zwischen Zuständen zu charakterisieren, und ein Agentenmodell, das Aktionen des Straßenagenten berücksichtigt. Das Verfahren umfasst das Steuern eines oder mehrerer Fahrzeugsysteme des Ego-Fahrzeugs gemäß dem zukünftigen Zustand des Straßenagenten.

Aus der CN 110 562 239 A sind ein Verfahren und eine Vorrichtung zur Steuerung des optimalen Energiemanagements auf der Grundlage der Vorhersage der geforderten Leistung in einem variablen Bereich bekannt. Das Verfahren umfasst die folgenden Schritte: Auswahl der Fahrzeuglängsgeschwindigkeit und der beschleunigten Längsgeschwindigkeit als Vorhersagevariablen durch Entwicklung eines selbstanpassenden Markov-Ketten-Vorhersageverfahrens, wodurch eine indirekte Vorhersage der angeforderten Leistung realisiert wird; Steuerung des Fahrzeugs, um in zwei verschiedenen Antriebsmodi zu arbeiten, durch Berechnung und Vergleich des äquivalenten Energieverbrauchs eines Hybrid-Antriebsmodus mit dem eines rein elektrischen Modus in Echtzeit; Verwenden der äquivalenten Treibstoffverbrauchsminimumsteuerstrategie als Entwicklungsgrundlage, Berücksichtigen von Fahrbetriebszustandscharakteristiken und Bedarfscharakteristiken des Fahrzeugs, Durchführen einer Echtzeitlösung einer Optimierungsdomäne gemäß einer Bedarfsleistungsvariablen und Entwerfen einer variablen Domänen-äquivalenten Treibstoffverbrauchsminimumsteuerstrategie. Das Verfahren zur Vorhersage des Leistungsbedarfs kann die Genauigkeit der Vorhersage des Leistungsbedarfs und die Selbstanpassung sowie die Reaktionscharakteristiken des Energiesystems verbessern, einen Arbeitsmodus vernünftig umschalten, die allgemeinen Energieverbrauchscharakteristiken des Systems optimieren und die Fahrstabilität verbessern, während die Arbeitsstabilität des Energiesystems garantiert wird.

Der Erfindung liegt die Aufgabe zu Grunde, ein Verfahren und eine Vorrichtung zum Unterstützen einer Manöverplanung für ein zumindest teilautomatisiert fahrendes Fahrzeug oder einen Roboter bereitzustellen.

Die Aufgabe wird erfindungsgemäß durch ein Verfahren mit den Merkmalen des Patentanspruchs 1 und eine Vorrichtung mit den Merkmalen des Patentanspruchs 7 gelöst. Vorteilhafte Ausgestaltungen der Erfindung ergeben sich aus den Unteransprüchen.

Insbesondere wird ein Verfahren zum Unterstützen einer Manöverplanung für ein zumindest teilautomatisiert fahrendes Fahrzeug oder einen Roboter zur Verfügung gestellt, wobei ein Zustandsraum eines Umfelds des Fahrzeugs oder des Roboters in diskreter Form mittels eines vorgegebenen Markow-Entscheidungsproblems beschrieben wird, wobei eine Manöverplanung für das Fahrzeug oder den Roboter ausgehend von dem Markow-Entscheidungsproblem durch Ausführen mindestens eines Optimierungsverfahrens unterstützt wird, wobei während eines Betriebs des Fahrzeugs oder des Roboters real stattfindende Übergänge zwischen Zuständen des Zustandsraums aufgezeichnet werden, und wobei durch Auswerten einer Häufigkeit der aufgezeichneten Übergänge Übergangswahrscheinlichkeiten zwischen den Zuständen des Markow-Entscheidungsproblems bestimmt und aktualisiert werden.

Ferner wird insbesondere eine Vorrichtung zum Unterstützen einer Manöverplanung für ein zumindest teilautomatisiert fahrendes Fahrzeug oder einen Roboter geschaffen, umfassend eine Manöverunterstützungseinrichtung, wobei die Manöverunterstützungseinrichtung dazu eingerichtet ist, einen Zustandsraum eines Umfelds des Fahrzeugs oder des Roboters in diskreter Form mittels eines vorgegebenen Markow-Entscheidungsproblems zu beschreiben, eine Manöverplanung für das Fahrzeug oder den Roboter ausgehend von dem Markow-Entscheidungsproblem durch Ausführen mindestens eines Optimierungsverfahrens zu unterstützen, und während eines Betriebs des Fahrzeugs oder des Roboters real stattfindende Übergänge zwischen Zuständen des Zustandsraums aufzuzeichnen, und durch Auswerten einer Häufigkeit der aufgezeichneten Übergänge Übergangswahrscheinlichkeiten zwischen den Zuständen des Markow-Entscheidungsproblems zu bestimmen und zu aktualisieren.

Das Verfahren und die Vorrichtung ermöglichen es, das Markow-Entscheidungsproblem, also das einer Umfeldbeschreibung und einer Manöverplanung zugrundeliegende Modell, mit Hilfe von real erfassten Messdaten, das heißt real beobachteter Übergänge zwischen Zuständen, zu aktualisieren. Hierdurch kann das Markow-Entscheidungsproblem insbesondere kontinuierlich an ein reales, insbesondere sich veränderndes, Umfeld und ein reales Verhalten anderer Objekte (z.B. anderer Fahrzeuge) angepasst werden. Dies ist insbesondere von Vorteil, wenn das vorgegebene Markow-Entscheidungsproblem auf Grundlage von Expertenwissen erstellt wurde, in dem Annahmen über Zustände, Übergänge zwischen den Zuständen und zugehörige Übergangswahrscheinlichkeiten getroffen wurden. Um eine Anpassung an reale Übergänge zu erreichen, werden während eines Betriebs des Fahrzeugs oder des Roboters real stattfindende Übergänge zwischen Zuständen des Zustandsraums aufgezeichnet. Dies erfolgt insbesondere, indem Sensordaten einer Sensorik des Fahrzeugs oder des Roboters erfasst werden und ausgehend von den erfassten Sensordaten die jeweiligen diskreten Zustände im Zustandsraum erkannt werden. Aus erkannten Zustandsänderungen können dann die Übergänge zwischen den Zuständen bestimmt und aufgezeichnet werden. Durch Auswerten einer Häufigkeit des Auftretens der aufgezeichneten Übergänge werden Übergangswahrscheinlichkeiten zwischen den Zuständen des Markow-Entscheidungsproblems bestimmt. Die Übergangswahrscheinlichkeiten zwischen den Zuständen in dem Markow-Entscheidungsproblem werden anschließend aktualisiert.

Ein Markow-Entscheidungsproblem (engl. Markov Decision Process, MDP) ist ein Modell von Entscheidungsproblemen. Hierbei ist ein Nutzen eines Agenten von einer Abfolge von Entscheidungen abhängig, wobei die Abfolge sequentielle Zustandsübergänge zwischen diskreten Zuständen in einem Zustandsraum umfasst. Für die einzelnen Zustandsübergänge gilt hierbei die Markow-Annahme, das heißt eine Übergangswahrscheinlichkeit, einen Zustand s' von Zustand s aus zu erreichen, ist nur von s abhängig und nicht von einer in der Vergangenheit liegenden Historie, das heißt von Vorgängern von s. Der Zustandsraum bildet insbesondere diskrete Zustände in einem Umfeld des Fahrzeugs oder des Roboters ab. Prinzipiell kann das Markow-Entscheidungsproblem auch als Factored-Markow-Entscheidungsproblem (engl. Factored Markov Decision Processes, FMDP) ausgestaltet sein.

Ein Zustand im Zustandsraum kann insbesondere mehrere Größen bzw. Eigenschaften umfassen, d.h. ein Zustand ist insbesondere mehrdimensional. Ein Zustand ist hierbei insbesondere definiert als eine bestimmte Ausprägung dieser Größen bzw. Eigenschaften. Die Zustände im Zustandsraum sind insbesondere diskret gewählt. Der Zustandsraum ist insbesondere ein Zustandsraum auf einer höheren Ebene, das heißt Zustände werden nicht über Sensorrohdaten abgebildet, sondern über höherwertigere Merkmale und Eigenschaften, die aus den Sensorrohdaten, beispielsweise mittels einer Objekt- und/oder Mustererkennung, abgeleitet wurden. Zustände können beispielsweise Hindernispositionen und/oder Hindernisgeschwindigkeiten und/oder eine Art oder Klasse von Hindernissen im Umfeld umfassen.

Die Manöverplanung für das Fahrzeug oder den Roboter wird ausgehend von dem Markow-Entscheidungsproblem durch Ausführen mindestens eines Optimierungsverfahrens unterstützt. Hierzu kann insbesondere vorgesehen sein, dass mittels Dynamischer Programmierung optimale Aktionswerte für diskretisierte Aktionen ausgehend von diskreten Zuständen im Zustandsraum bestimmt werden, wobei eine Abbildung mit Zuständen im Zustandsraum als Eingabewerten und mit Aktionswerten für Aktionen im Zustandsraum als Ausgabewerten mittels eines Reinforcement Learning-Verfahren gelernt wird, wobei ein Reinforcement Learning Agent hierbei auf Grundlage der mittels der Dynamischen Programmierung bestimmten optimalen Aktionswerte initialisiert wird, und wobei die gelernte Abbildung für eine Manöverplanung bereitgestellt wird. Dies hat als Vorteil, dass der Reinforcement Learning Agent beim Lernen nicht von Null auf beginnen muss, sondern bereits mit einer, zumindest hinsichtlich einer Anzahl diskreter Zustände im Zustandsraum, optimalen Lösung starten kann. Dies wird dadurch ermöglicht, dass optimale Aktionswerte für einzelne Aktionen für diskrete Zustände im Zustandsraum bereits vor Anwenden des Reinforcement Learning mittels einer Dynamischen Programmierung bestimmt werden. Mit Hilfe der derart bestimmten optimalen Aktionswerte wird die Abbildung, die von dem Reinforcement Learning Agenten angelernt wird, initialisiert. Der Reinforcement Learning Agent muss hierdurch nicht bei Null beginnen, sondern kann auf die mittels der Dynamischen Programmierung bestimmten Aktionswerte aufbauen.

Grundsätzlich kann auch nur eine Verwendung eines Reinforcement Learning-Verfahrens vorgesehen sein, ohne dass das Reinforcement-Learning-Verfahren mittels einer durch Dynamische Programmierung erzeugte Abbildung initialisiert wird. Hierbei ist die Vorgehensweise analog zu der voranstehend beschriebenen. Prinzipiell können jedoch auch andere Optimierungsverfahren vorgesehen sein. Das verwendete mindestens eine Optimierungsverfahren arbeitet jedoch stets auf Grundlage des Markow-Entscheidungsproblems.

Die Dynamische Programmierung ist ein Verfahren zum Lösen eines Optimierungsproblems durch Aufteilung eines komplexen Problems in einfachere Unter- oder Teilprobleme. Eine Lösung erfolgt hierbei auf rekursive Weise. Insbesondere ist die Dynamische Programmierung ein algorithmisches Paradigma, das eine Klasse von Optimierungsverfahren beschreibt, die zur Lösung einer vorgegebenen Problemstellung ein perfektes Modell eines Umfelds als Markow-Entscheidungsproblem verwenden. Die Dynamische Programmierung wird insbesondere in dem Zustandsraum mit diskretisierten Zuständen angewendet. Insbesondere liefert die dynamische Programmierung als Ergebnis optimale Aktionswerte als Maß für eine Belohnung für diskretisierte Aktionen ausgehend von den diskreten Zuständen im Zustandsraum.

Reinforcement Learning (auch als bestärkendes oder verstärkendes Lernen bezeichnet) ist ein Verfahren des Maschinellen Lernens, bei dem ein Agent selbständig eine Strategie erlernt, um erhaltene Belohnungen zu maximieren. Eine Belohnung kann hierbei sowohl positiv als auch negativ sein. Anhand der erhaltenen Belohnungen approximiert der Agent eine Belohnungsfunktion, die beschreibt, welchen Wert ein Zustand oder eine Aktion hat. Im Zusammenhang mit Aktionen wird ein solcher Wert als Aktionswert (engl. action value) bezeichnet. Verfahren des Reinforcement Learning betrachten insbesondere eine Interaktion des Agenten mit seiner Umwelt, die in Form eines Markow-Entscheidungsproblems formuliert ist. Der Agent kann ausgehend von einem gegebenen, beispielsweise aus erfassten Sensordaten mindestens eines Sensors abgeleiteten, Zustand durch eine aus mehreren Aktionen ausgewählte Aktion in einen anderen Zustand gelangen. In Abhängigkeit der getroffenen Entscheidung, d.h. der ausgeführten Aktion, erhält der Agent eine Belohnung (engl. reward). Der Agent hat hierbei die Aufgabe, einen zukünftig erwarteten Gewinn, der sich aus diskontierten Belohnungen, also der Gesamtbelohnung zusammensetzt, zu maximieren. Am Ende des Verfahrens steht für eine vorgegebene Strategie eine approximierte Belohnungsfunktion, mit der für jede Aktion ein Belohnungswert bzw. Aktionswert bereitgestellt oder geschätzt werden kann.

Eine Aktion kann für ein Fahrzeug beispielsweise die folgenden Handlungen umfassen: Geradeausfahren mit aktiviertem Abstandsregeltempomat (ACC) (d.h. auf der Fahrspur bleiben und keinen Spurwechsel durchführen), Geradeausfahren (keine Beschleunigung), Geradeausfahren und Bremsen, Fahrspurwechsel auf die linke Fahrspur oder Fahrspurwechsel auf die rechte Fahrspur etc.

Eine Belohnung (engl. reward) bzw. ein Aktionswert für eine Aktion im Zustandsraum kann insbesondere die folgenden Einflüsse berücksichtigen: eine Kollisionsvermeidung, eine Pfadtreue (d.h. kein oder nur ein geringes Abweichen von einem von einer Navigationseinrichtung vorgegebenen Pfad), ein zeitoptimales Verhalten und/oder einen Komfort bzw. eine Zweckmäßigkeit für Fahrzeuginsassen.

Es kann vorgesehen sein, dass das Bereitstellen der Abbildung nach Durchführen des Optimierungsverfahrens ein Übermitteln der bestimmten Abbildung an mindestens ein Steuergerät umfasst. Insbesondere kann das Bereitstellen ein Einladen der bestimmten Abbildung in einen Speicher des mindestens einen Steuergeräts umfassen. Das mindestens eine Steuergerät ist beispielsweise in einem Fahrzeug oder einem Roboter ausgebildet und dient dort einer Manöverplanung.

Es kann hierbei vorgesehen sein, dass die Abbildung eine tabellenartige Form aufweist. Dies stellt eine einfache Form des Reinforcement Learning dar, welche auch als "Tabular Reinforcement Learning" bezeichnet werden kann. Hierbei sind die mit Aktionen korrespondierenden Aktionswerte mit den einzelnen Zuständen im Zustandsraum in Form von Tabelleneinträgen verknüpft. Der Reinforcement Learning Agent kann die einzelnen in der Tabelle hinterlegten Aktionswerte dann im Rahmen des Lernens abrufen und abändern. Zum Initialisieren werden die mittels der Dynamischen Programmierung bestimmten Aktionswerte für die jeweiligen Zustände in der Tabelle hinterlegt. Anschließend wird das Reinforcement Learning-Verfahren gestartet.

Es kann alternativ vorgesehen sein, dass die Abbildung mittels eines Neuronalen Netzes bereitgestellt wird, wobei das Neuronale Netz zum Initialisieren ausgehend von den bestimmten optimalen Aktionswerten im Wege des überwachten Lernens trainiert wird. Dies hat den Vorteil, dass trotz einer Initialisierung mit diskreten Zuständen anschließend auch für zwischen den diskreten Zuständen liegende Zustände des Zustandsraums Aktionswerte bereitgestellt werden können. Ist das Initialisieren in Form eines überwachten Lernens abgeschlossen, so wird das Neuronale Netz mittels des Reinforcement Learnings weitertrainiert. Dies erfolgt insbesondere auf Grundlage von Zuständen eines realen Umfeldes. Das Neuronale Netz ist insbesondere als tiefes Neuronales Netz ausgebildet.

Teile der Vorrichtung, insbesondere die Manöverunterstützungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird.

Ein Fahrzeug ist insbesondere ein Kraftfahrzeug. Prinzipiell kann ein Fahrzeug jedoch ein anderes Land-, Wasser-, Luft-, Schienen- oder Raumfahrzeug sein. Ein Roboter kann prinzipiell beliebig ausgebildet sein, beispielsweise als Transportroboter, als Produktionsroboter oder als Pflegeroboter etc.

In einer Ausführungsform ist vorgesehen, dass beim Betrieb des Fahrzeugs oder des Roboters zusätzlich Übergänge in Zustände, die nicht in dem Markow-Entscheidungsproblem enthalten sind, erfasst und/oder erkannt werden, wobei diese erfassten und/oder erkannten Zustände und zugehörige Übergangswahrscheinlichkeiten dem Markow-Entscheidungsproblem hinzugefügt werden. Hierdurch kann das Markow-Entscheidungsproblem um neue Zustände mit zugehörigen Übergangswahrscheinlichkeiten von/nach anderen Zuständen erweitert werden. Es kann beispielsweise vorgesehen sein, dass beim Betrieb des Fahrzeugs oder des Roboters erfasste Sensordaten mittels einer Mustererkennung und/oder Klassifizierung ausgewertet werden, wobei hierbei festgestellt wird, ob ein noch nicht in dem Markow-Entscheidungsproblem enthaltener Zustand vorliegt wird. Liegt der noch nicht enthaltene Zustand beispielsweise mit einer vorgegebenen Häufigkeit vor, so wird der Zustand dem Markow-Entscheidungsproblem mit den zugehörigen Übergangswahrscheinlichkeiten hinzugefügt.

Es kann auch vorgesehen sein, dass Zustände aus dem Markow-Entscheidungsproblem entfernt werden, beispielsweise wenn ein Zustand für einen vorgeschriebenen Zeitraum überhaupt nicht mehr vorgelegen hat.

In einer Ausführungsform ist vorgesehen, dass beim Aktualisieren der Übergangswahrscheinlichkeiten sowohl die bereits in dem Markow-Entscheidungsproblem hinterlegten Übergangswahrscheinlichkeiten als auch die ausgehend von den real stattfindenden Übergängen bestimmten Übergangswahrscheinlichkeiten berücksichtigt werden. Hierdurch können auch seltene, aber gegebenenfalls sicherheitsrelevante, Zustände, die gezielt in das vorgegebene Entscheidungsproblem aufgenommen wurden, weiterhin berücksichtigt werden, da zugehörige Übergangswahrscheinlichkeiten beim Aktualisieren nicht vollständig ersetzt werden, sondern beim Aktualisieren ebenfalls berücksichtigt werden. Es kann hierbei vorgesehen sein, dass die im Markow-Entscheidungsproblem bereits vorhandenen Übergangswahrscheinlichkeiten und die für die real stattfindenden Übergänge bestimmten Übergangswahrscheinlichkeiten jeweils gewichtet berücksichtigt werden, sodass eine durchschnittliche Übergangswahrscheinlichkeit bestimmt werden kann.

Das (fortlaufende) Aktualisieren der Übergangswahrscheinlichkeiten kann beispielsweise mittels der folgenden Formel berechnet werden:

$$p\_neu = (p\_alt * N + p) / (N+1),$$

wobei p_neu die zum Aktualisieren verwendete durchschnittliche Übergangswahrscheinlichkeit für einen aktuellen Zeitschritt ist; p_alt ist die bisherige hinterlegte (durchschnittliche) Übergangswahrscheinlichkeit; N ist die Anzahl der in der bisherigen hinterlegten Übergangswahrscheinlichkeit berücksichtigten Schritte und p ist die aktuell aus den real stattfindenden Übergängen bestimmte Übergangswahrscheinlichkeit. Prinzipiell kann jedoch auch anders vorgegangen werden, beispielsweise indem eine Gewichtung zeitabhängig gewählt wird, beispielsweise indem zeitlich weiter zurückliegende Übergangswahrscheinlichkeiten weniger stark berücksichtigt werden als aktuellere.

In einer Ausführungsform ist vorgesehen, dass das Aktualisieren der Übergangswahrscheinlichkeiten und/oder das Hinzufügen von Zuständen im Fahrzeug oder im Roboter durchgeführt wird. Hierdurch kann das Markow-Entscheidungsproblem auf Fahrzeugebene oder Roboterebene, das heißt individuell vor Ort, insbesondere fortlaufend aktualisiert und hierdurch an ein reales und/oder sich änderndes Umfeld des Fahrzeugs oder des Roboters angepasst werden.

In einer Ausführungsform ist vorgesehen, dass das Aktualisieren der Übergangswahrscheinlichkeiten zusätzlich oder alternativ auf einem Backendserver durchgeführt wird, wobei das auf dem Backendserver aktualisierte Markow-Entscheidungsproblem an das Fahrzeug oder den Roboter übermittelt wird. Hierdurch können die erfassten realen Übergänge zwischen den Zuständen des Markow-Entscheidungsproblems von mehreren Fahrzeugen oder Robotern beim Aktualisieren berücksichtigt werden. Dies erlaubt es insbesondere, erfasste real stattfindende Übergänge einer ganzen Flotte von Fahrzeugen oder Robotern beim Aktualisieren des Markow-Entscheidungsproblems zu berücksichtigen. Eine Anpassung eines anfänglich vorgegebenen Markow-Entscheidungsproblems an ein reales Umfeld und real stattfindende Übergänge kann hierdurch sehr viel schneller erfolgen, da insgesamt eine größere Anzahl von Übergängen erfasst und berücksichtigt werden kann.

Es wird daher insbesondere auch ein Backendserver geschaffen, umfassend eine Datenverarbeitungseinrichtung, wobei die Datenverarbeitungseinrichtung dazu eingerichtet ist, von mindestens einem Fahrzeug oder mindestens einem Roboter während eines Betriebs des mindestens einen Fahrzeugs oder des mindestens einen Roboters aufgezeichnete real stattfindende Übergänge zwischen Zuständen eines Zustandsraums eines Markow-Entscheidungsproblems zu empfangen, durch Auswerten einer Häufigkeit der empfangenen aufgezeichneten Übergänge Übergangswahrscheinlichkeiten zwischen den Zuständen des Markow-Entscheidungsproblems zu bestimmen und zu aktualisieren, und das aktualisierte Markow-Entscheidungsproblem an mindestens ein Fahrzeug oder mindestens einen Roboter zu übermitteln.

Entsprechend ist in einer Ausführungsform der Vorrichtung vorgesehen, dass die Manöverunterstützungseinrichtung zusätzlich oder alternativ ferner dazu eingerichtet ist, die aufgezeichneten real stattfindenden Übergänge an einen Backendserver zu übermitteln und ein von dem Backendserver aktualisiertes Markow-Entscheidungsproblem von dem Backendserver zu empfangen.

Es kann hierbei vorgesehen sein, dass das Aktualisieren des Markow-Entscheidungsproblems ausschließlich vom Backendserver durchführt wird oder dass eine Aktualisierung sowohl in den einzelnen Fahrzeugen oder Robotern als auch auf dem Backendserver erfolgt.

In einer Ausführungsform ist vorgesehen, dass eine Übergangswahrscheinlichkeit für einen Übergang in einen Zustand nur aktualisiert wird, wenn während des Betriebs eine vorgegebene Mindestanzahl dieses Überganges in diesen Zustand stattgefunden hat. Hierdurch kann eine Aktualisierungsrate und eine Empfindlichkeit beim Aktualisieren des Markow-Entscheidungsproblems gesteuert werden. Es kann beispielsweise vorgesehen sein, dass für die Übergänge jeweils das Überschreiten eines Schwellenwertes überprüft wird, der der vorgegebenen Mindestanzahl entspricht. Nur bei Überschreiten des Schwellenwertes findet dann eine Aktualisierung einer Übergangswahrscheinlichkeit des jeweiligen Übergangs statt.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird insbesondere auch ein Fahrzeug oder ein Roboter geschaffen, umfassend mindestens eine Vorrichtung nach einer der beschriebenen Ausführungsformen.

Weiter wird auch ein System geschaffen, umfassend mindestens eine Vorrichtung gemäß einer der beschriebenen Ausführungsformen und einen Backendserver gemäß einer der beschriebenen Ausführungsformen.

Nachfolgend wird die Erfindung anhand bevorzugter Ausführungsbeispiele unter Bezugnahme auf die Figuren näher erläutert. Hierbei zeigen:

Fig. 1   eine schematische Darstellung einer Ausführungsform der Vorrichtung zum Unterstützen einer Manöverplanung für ein zumindest teilautomatisiert fahrendes Fahrzeug oder einen Roboter;

Fig. 2   eine schematische Darstellung einer Regelstruktur zum automatisierten Fahren eines Fahrzeugs zur Verdeutlichung der Einbettung des in dieser Offenbarung beschriebenen Verfahrens in eine Manöverplanung

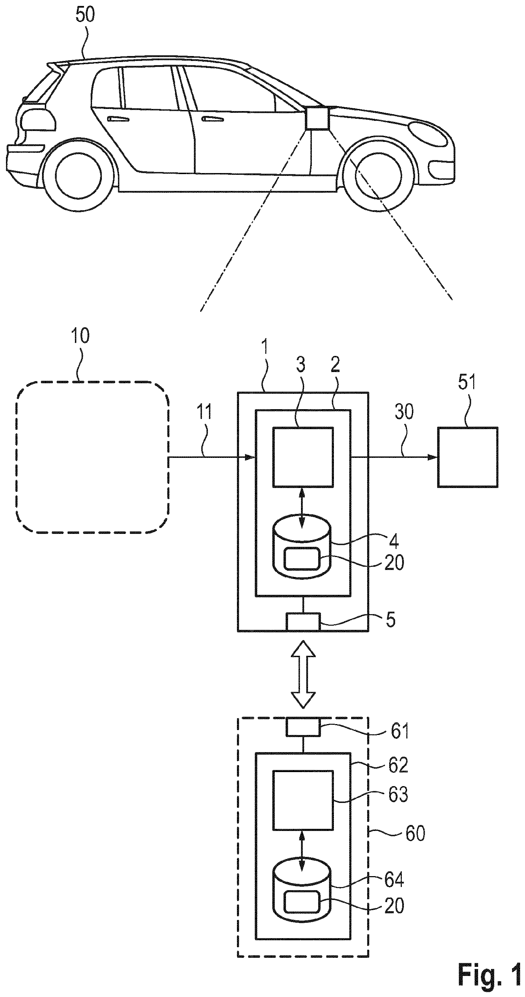

In Fig. 1 ist eine schematische Darstellung einer Ausführungsform der Vorrichtung 1 zum Unterstützen einer Manöverplanung für ein zumindest teilautomatisiert fahrendes Fahrzeug 50 oder einen Roboter gezeigt.

Die Vorrichtung 1 umfasst eine Manöverunterstützungseinrichtung 2. Die Manöverunterstützungseinrichtung 2 umfasst eine Recheneinrichtung 3 und einen Speicher 4. Die Recheneinrichtung 3 kann auf in dem Speicher 4 hinterlegte Daten zugreifen und Rechenoperationen auf diesen ausführen. Insbesondere führt die Manöverunterstützungseinrichtung 2 das in dieser Offenbarung beschriebene Verfahren aus.

Die Manöverunterstützungseinrichtung 2 ist dazu eingerichtet, einen Zustandsraum 10 eines Umfelds des Fahrzeugs 50 oder des Roboters in diskreter Form mittels eines vorgegebenen Markow-Entscheidungsproblems 20 zu beschreiben. Das Markow-Entscheidungsproblem 20 ist insbesondere eine modellartige Beschreibung des Umfeldes und umfasst hierzu für jeden der Zustände 11 im Zustandsraum 10 Übergangswahrscheinlichkeiten, die jeweils eine Wahrscheinlichkeit eines Übergangs von einem Zustand 11 in einen anderen Zustand 11 beschreiben. Das Markow-Entscheidungsproblem 20 wird bzw. ist anfangs vorgegeben, beispielsweise wurde das Markow-Entscheidungsproblem 20 mittels Expertenwissen erzeugt, indem diskrete Zustände 11 im Zustandsraum 10 sowie jeweilige Übergangswahrscheinlichkeiten zwischen den Zuständen 11 definiert werden. Das Markow-Entscheidungsproblem 20 ist in dem Speicher 4 hinterlegt.

Die Manöverunterstützungseinrichtung 2 unterstützt eine Manöverplanung für das Fahrzeug 50 oder den Roboter ausgehend von dem Markow-Entscheidungsproblem 20 durch Ausführen mindestens eines Optimierungsverfahrens. Hierzu kann insbesondere vorgesehen sein, dass mittels Dynamischer Programmierung optimale Aktionswerte für diskretisierte Aktionen ausgehend von diskreten Zuständen 11 im Zustandsraum 10 bestimmt werden, wobei eine Abbildung 30 mit Zuständen 11 im Zustandsraum 10 als Eingabewerten und mit Aktionswerten für Aktionen im Zustandsraum 10 als Ausgabewerten mittels eines Reinforcement Learning-Verfahren gelernt wird, wobei ein Reinforcement Learning Agent hierbei auf Grundlage der mittels der Dynamischen Programmierung bestimmten optimalen Aktionswerte initialisiert wird, und wobei die gelernte Abbildung 30 für eine Manöverplanung bereitgestellt wird.

Alternativ kann auch nur ein Reinforcement Learning-Verfahren eingesetzt werden, um Aktionswerte für Aktionen in den verschiedenen Zuständen 11 zu lernen. Auch in diesem Fall wird eine Abbildung 30 gelernt und bereitgestellt.

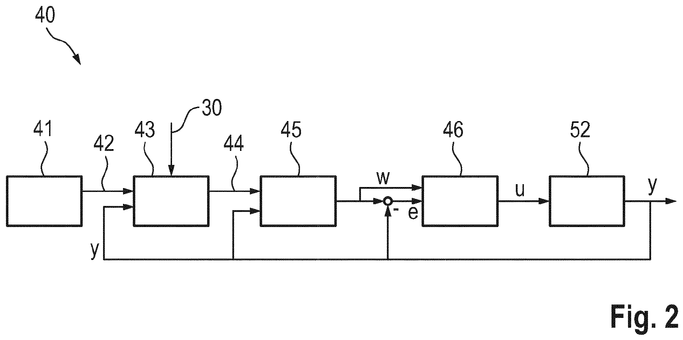

Die bestimmte Abbildung 30 wird zur Manöverplanung bereitgestellt. Beispielsweise kann die bestimmte Abbildung 30 in einen Speicher eines Steuergeräts 51 einladen werden, wobei mittels des Steuergeräts 51 eine Manöverplanung auf Grundlage der in der Abbildung 30 enthaltenen Aktionswerte erfolgt (vgl. auch Fig. 2). Das Steuergerät 51 erhält dann einen aktuellen Zustand 11 im Zustandsraum 10 und maximiert ausgehend von den für diesen Zustand 11 in der Abbildung 30 für mögliche Aktionen hinterlegten Aktionswerten durch Auswahl von optimalen Aktionen einen mittels einer Belohnungsfunktion bestimmten Belohnungswert.

Es ist vorgesehen, dass während eines Betriebs des Fahrzeugs 50 oder des Roboters real stattfindende Übergänge zwischen Zuständen 11 des Zustandsraums 10 aufgezeichnet werden. Dies erfolgt insbesondere mittels der Manöverunterstützungseinrichtung 2, die durchlaufende Zustände 11 im Zustandsraum 10 aufzeichnet, sodass Übergänge zwischen den Zuständen 11 hieraus abgeleitet und aufgezeichnet werden können.

Durch Auswerten einer Häufigkeit der aufgezeichneten Übergänge bestimmt die Manöverunterstützungseinrichtung 2 Übergangswahrscheinlichkeiten zwischen den Zuständen 11 des Markow-Entscheidungsproblems 20. Anschließend wird das Markow-Entscheidungsproblem 20 mit den bestimmten Übergangswahrscheinlichkeiten aktualisiert. Hierzu werden beispielsweise jeweils die Übergangswahrscheinlichkeiten zu allen Übergängen zwischen Zuständen 11, die im Rahmen des Betriebs des Fahrzeugs 50 oder des Roboters stattgefunden haben, aktualisiert.

Es ist vorgesehen, dass das mindestens eine Optimierungsverfahren nach dem Aktualisieren des Markow-Entscheidungsproblems 20 erneut durchgeführt wird, sodass insbesondere eine aktualisierte Abbildung 30 bereitgestellt werden kann und in den Speicher des Steuergeräts 51 eingeladen werden kann.

Es kann vorgesehen sein, dass beim Betrieb des Fahrzeugs 50 oder des Roboters zusätzlich Übergänge in Zustände 11, die nicht in dem Markow-Entscheidungsproblem 20 enthalten sind, erfasst und/oder erkannt werden, wobei diese erfassten und/oder erkannten Zustände 11 und zugehörige Übergangswahrscheinlichkeiten dem Markow-Entscheidungsproblem 20 hinzugefügt werden.

Es kann vorgesehen sein, dass beim Aktualisieren der Übergangswahrscheinlichkeiten sowohl die bereits in dem Markow-Entscheidungsproblem 20 hinterlegten Übergangswahrscheinlichkeiten als auch die ausgehend von den real stattfindenden Übergängen bestimmten Übergangswahrscheinlichkeiten berücksichtigt werden. Hierbei können die bereits enthaltenen Übergangswahrscheinlichkeiten und die ausgehend von den aufgezeichneten real stattfindenden Übergängen bestimmten Übergangswahrscheinlichkeiten jeweils gewichtet berücksichtigt werden.

Es kann vorgesehen sein, dass das Aktualisieren der Übergangswahrscheinlichkeiten und/oder das Hinzufügen von Zuständen 11 im Fahrzeug 50 oder im Roboter durchgeführt wird.

Es kann vorgesehen sein, dass das Aktualisieren der Übergangswahrscheinlichkeiten zusätzlich oder alternativ auf einem Backendserver 60 durchgeführt wird, wobei das auf dem Backendserver 60 aktualisierte Markow-Entscheidungsproblem 20 an das Fahrzeug 50 oder den Roboter übermittelt wird. Die Vorrichtung 1 umfasst beispielsweise eine Kommunikationsschnittstelle 5, über die die aufgezeichneten real stattfindenden Übergänge mit zugehörigen Übergangswahrscheinlichkeiten an eine Kommunikationsschnittstelle 61 des Backendservers 60 übermittelt werden. Nach dem Aktualisieren des Markow-Entscheidungsproblems 20 auf dem Backendserver 60 wird das aktualisierte Markow-Entscheidungsproblem 20 über die Kommunikationsschnittstellen 5, 61 zurück an die Vorrichtung 1 übermittelt und dort im Speicher 4 abgelegt. Anschließend werden insbesondere die Aktionswerte für die Abbildung 30 mittels des mindestens einen Optimierungsverfahrens erneut bestimmt. Die derart aktualisierte Abbildung 30 wird in das Steuergerät 51 eingeladen und dort zur Manöverplanung eingesetzt.

Der Server 60 umfasst eine Datenverarbeitungseinrichtung 62, wobei die Datenverarbeitungseinrichtung 62 eine Recheneinrichtung 63 und einen Speicher 64 umfasst. Die Datenverarbeitungseinrichtung 62 ist dazu eingerichtet, von mindestens einem Fahrzeug 50 oder mindestens einem Roboter während eines Betriebs des mindestens einen Fahrzeugs 50 oder des mindestens einen Roboters aufgezeichnete real stattfindende Übergänge zwischen Zuständen 11 des Zustandsraums 10 eines Markow-Entscheidungsproblems 20 zu empfangen, durch Auswerten einer Häufigkeit der empfangenen aufgezeichneten Übergänge Übergangswahrscheinlichkeiten zwischen den Zuständen des Markow-Entscheidungsproblems 20 zu bestimmen und zu aktualisieren, und das aktualisierte Markow-Entscheidungsproblem 20 an mindestens ein Fahrzeug 50 oder mindestens einen Roboter zu übermitteln.

Es kann vorgesehen sein, dass das Aktualisieren auf Grundlage der aufgezeichneten real stattfindenden Übergänge zyklisch, insbesondere regelmäßig, wiederholt wird. Hierbei kann das zyklische, insbesondere regelmäßige, Aktualisieren sowohl in den Fahrzeugen 50 oder Robotern stattfinden als auch auf dem Backendserver 60.

Es kann vorgesehen sein, dass eine Übergangswahrscheinlichkeit für einen Übergang in einen Zustand 11 nur aktualisiert wird, wenn während des Betriebs des Fahrzeugs 50 oder des Roboters eine vorgegebene Mindestanzahl dieses Überganges in diesen Zustand stattgefunden hat.

Die Fig. 2 zeigt eine schematische Darstellung einer Regelstruktur 40 zum automatisierten Fahren eines Fahrzeugs 50 zur Verdeutlichung der Einbettung des in dieser Offenbarung beschriebenen Verfahrens in eine Manöverplanung. Insbesondere erfolgt die Einbettung hierbei über die im Rahmen der Ausführung des mindestens einen Optimierungsverfahrens gelernte Abbildung 30, welche entscheidenden Einfluss auf die Manöverplanung nimmt.

Die Regelstruktur 40 umfasst eine Missionsplanung 41, mittels der strategische Ziele vorgegeben werden, beispielsweise eine möglichst kurze Fahrtroute, eine möglichste kurze Fahrzeit und/oder eine möglichst energieeffiziente und/oder komfortable Fahrweise etc.

Unter Berücksichtigung der übergeordneten Missionsziele 42 wird in einer taktischen Manöverplanung 43 auf Grundlage der bestimmten bzw. gelernten Abbildung 30 ein Fahrschlauch 44 bestimmt. Insbesondere werden hierbei ausgehend von einem als Regelgröße y verwendeten aktuellen Zustand mittels der gelernten Abbildung 30 Aktionswerte für mehrere mögliche Aktionen, die den Zustand in einen nachfolgenden Zustand überführen, bestimmt. Der Fahrschlauch 44 wird mittels der auf diese Weise geschätzten Aktionswerte bestimmt.

Ausgehend von dem bestimmten Fahrschlauch 44 und dem aktuellen Zustand (Regelgröße y) bestimmt ein Trajektorienplaner 45 eine konkrete Trajektorie für das Fahrzeug, welche einem Regler 46 als Führungsgröße w übermittelt wird. Der Regler 46 regelt insbesondere eine Längs- und eine Querführung des Fahrzeugs. Der Regler 46 bestimmt hierzu aus einer Regelabweichung e und der Führungsgröße w eine Stellgröße u und führt diese einer Aktorik 52 des Fahrzeugs zu.

## Bezugszeichenliste

| | |
|---|---|
| 1 | Vorrichtung |
| 2 | Manöverunterstützungseinrichtung |
| 3 | Recheneinrichtung |
| 4 | Speicher |
| 5 | Kommunikationsschnittstelle |
| 10 | Zustandsraum |
| 11 | Zustand |
| 20 | Markow-Entscheidungsproblem |
| 30 | Abbildung |
| 40 | Regelstruktur |
| 41 | Missionsplanung |
| 42 | Missionsziele |
| 43 | Manöverplanung |
| 44 | Fahrschlauch |
| 45 | Trajektorienplaner |
| 46 | Regler |
| 50 | Fahrzeug |
| 51 | Steuergerät |
| 60 | Backendserver |
| 61 | Kommunikationsschnittstelle |
| 62 | Datenverarbeitungseinrichtung |
| 63 | Recheneinrichtung |
| 64 | Speicher |
| w | Führungsgröße |
| e | Regelabweichung |
| u | Stellgröße |
| y | Regelgröße |

## Patentansprüche

1. Verfahren zum Unterstützen einer Manöverplanung für ein zumindest teilautomatisiert fahrendes Fahrzeug (50) oder einen Roboter,

   wobei ein Zustandsraum (10) eines Umfelds des Fahrzeugs (50) oder des Roboters in diskreter Form mittels eines vorgegebenen Markow-Entscheidungsproblems (20) beschrieben wird, wobei eine Manöverplanung für das Fahrzeug (50) oder den Roboter ausgehend von dem Markow-Entscheidungsproblem (20) durch Ausführen mindestens eines Optimierungsverfahrens unterstützt wird, wobei mittels des mindestens einen Optimierungsverfahrens optimale Aktionswerte für diskretisierte Aktionen ausgehend von diskreten Zuständen (11) im Zustandsraum (10) bestimmt werden, wobei eine Abbildung (30) mit Zuständen (10) im Zustandsraum (10) als Eingabewerten und mit Aktionswerten für Aktionen im Zustandsraum (10) als Ausgabewerten gelernt und für eine Manöverplanung bereitgestellt wird, wobei während eines Betriebs des Fahrzeugs (50) oder des Roboters real stattfindende Übergänge zwischen Zuständen (11) des Zustandsraums (10) aufgezeichnet werden, und wobei durch Auswerten einer Häufigkeit der aufgezeichneten Übergänge Übergangswahrscheinlichkeiten zwischen den Zuständen (11) des Markow-Entscheidungsproblems (20) bestimmt und aktualisiert werden.

2. Verfahren nach Anspruch 1, **dadurch gekennzeichnet, dass** beim Betrieb des Fahrzeugs (50) oder des Roboters zusätzlich Übergänge in Zustände (11), die nicht in dem Markow-Entscheidungsproblem (20) enthalten sind, erfasst und/oder erkannt werden, wobei diese erfassten und/oder erkannten Zustände (11) und zugehörige Übergangswahrscheinlichkeiten dem Markow-Entscheidungsproblem (20) hinzugefügt werden.

3. Verfahren nach einem der vorangegangenen Ansprüche, **dadurch gekennzeichnet, dass** beim Aktualisieren der Übergangswahrscheinlichkeiten sowohl die bereits in dem Markow-Entscheidungsproblem (20) hinterlegten Übergangswahrscheinlichkeiten als auch die ausgehend von den real stattfindenden Übergängen bestimmten Übergangswahrscheinlichkeiten berücksichtigt werden.

4. Verfahren nach einem der vorangegangenen Ansprüche, **dadurch gekennzeichnet, dass** das Aktualisieren der Übergangswahrscheinlichkeiten und/oder das Hinzufügen von Zuständen (11) im Fahrzeug (50) oder im Roboter durchgeführt wird.

**5.** Verfahren nach einem der vorangegangenen Ansprüche, **dadurch gekennzeichnet, dass** das Aktualisieren der Übergangswahrscheinlichkeiten zusätzlich oder alternativ auf einem Backendserver (60) durchgeführt wird, wobei das auf dem Backendserver (60) aktualisierte Markow-Entscheidungsproblem (20) an das Fahrzeug (50) oder den Roboter übermittelt wird.

**6.** Verfahren nach einem der vorangegangenen Ansprüche, **dadurch gekennzeichnet, dass** eine Übergangswahrscheinlichkeit für einen Übergang in einen Zustand (11) nur aktualisiert wird, wenn während des Betriebs eine vorgegebene Mindestanzahl dieses Überganges in diesen Zustand (11) stattgefunden hat.

**7.** Vorrichtung (1) zum Unterstützen einer Manöverplanung für ein zumindest teilautomatisiert fahrendes Fahrzeug (50) oder einen Roboter, umfassend:

eine Manöverunterstützungseinrichtung (2), wobei die Manöverunterstützungseinrichtung (2) dazu eingerichtet ist, einen Zustandsraum (11) eines Umfelds des Fahrzeugs (50) oder des Roboters in diskreter Form mittels eines vorgegebenen Markow-Entscheidungsproblems (20) zu beschreiben, eine Manöverplanung für das Fahrzeug (50) oder den Roboter ausgehend von dem Markow-Entscheidungsproblem (20) durch Ausführen mindestens eines Optimierungsverfahrens zu unterstützen, wobei mittels des mindestens einen Optimierungsverfahrens optimale Aktionswerte für diskretisierte Aktionen ausgehend von diskreten Zuständen (11) im Zustandsraum (10) bestimmt werden, wobei eine Abbildung (30) mit Zuständen (10) im Zustandsraum (10) als Eingabewerten und mit Aktionswerten für Aktionen im Zustandsraum (10) als Ausgabewerten gelernt und für eine Manöverplanung bereitgestellt wird, während eines Betriebs des Fahrzeugs (50) oder des Roboters real stattfindende Übergänge zwischen Zuständen (11) des Zustandsraums (10) aufzuzeichnen, und durch Auswerten einer Häufigkeit der aufgezeichneten Übergänge Übergangswahrscheinlichkeiten zwischen den Zuständen (11) des Markow-Entscheidungsproblems (20) zu bestimmen und zu aktualisieren.

**8.** Vorrichtung (1) nach Anspruch 7, **dadurch gekennzeichnet, dass** die Manöverunterstützungseinrichtung (2) zusätzlich oder alternativ ferner dazu eingerichtet ist, die aufgezeichneten Übergänge an einen Backendserver (60) zu übermitteln und ein von dem Backendserver (60) aktualisiertes Markow-Entscheidungsproblem (20) von dem Backendserver (60) zu empfangen.

**9.** Backendserver (60) zur Verwendung mit einer Vorrichtung (1) gemäß Anspruch 8, umfassend eine Datenverarbeitungseinrichtung (62), wobei die Datenverarbeitungseinrichtung (62) dazu eingerichtet ist, von mindestens einem Fahrzeug (60) oder mindestens einem Roboter gemäß Anspruch 10 mit mindestens einer Vorrichtung (1) gemäß Anspruch 8 während eines Betriebs des mindestens einen Fahrzeugs (50) oder des mindestens einen Roboters aufgezeichnete real stattfindende Übergänge zwischen Zuständen (11) eines Zustandsraums (10) eines Markow-Entscheidungsproblems (20) zu empfangen, durch Auswerten einer Häufigkeit der empfangenen aufgezeichneten Übergänge Übergangswahrscheinlichkeiten zwischen den Zuständen (11) des Markow-Entscheidungsproblems (20) zu bestimmen und zu aktualisieren, und das aktualisierte Markow-Entscheidungsproblem (20) an mindestens ein Fahrzeug (50) oder mindestens einen Roboter zu übermitteln.

**10.** Fahrzeug (50) oder Roboter, umfassend mindestens eine Vorrichtung (1) nach Anspruch 7 oder 8.

**Claims**

**1.** Method for supporting maneuver planning for a vehicle (50) driving in an at least partially automated manner, or a robot,

wherein a state space (10) of the surroundings of the vehicle (50) or the robot is described in discrete form by means of a predetermined Markov decision problem (20), wherein maneuver planning for the vehicle (50) or the robot is supported, based on the Markov decision problem (20), by executing at least one optimization method, wherein optimal action values for discretized actions are determined by means of the at least one optimization method based on discrete states (11) in the state space (10), wherein a map (30) having states (10) in the state space (10) as input values and having action values for actions in the state space (10) as output values is learned and provided for maneuver planning, wherein, during an operation of the vehicle (50) or the robot, actually occurring transitions between states (11) of the state space (10) are recorded, and wherein transition probabilities between the states (11) of the Markov decision problem (20) are determined and updated by evaluating a frequency of the recorded transitions.

**2.** Method according to claim 1, **characterized in that,** during the operation of the vehicle (50) or the robot, additional transitions into states (11) which are not contained in the Markov decision problem (20) are detected and/or recognized, these detected and/or recognized states (11) and associated transition probabilities being added to the Markov decision problem (20).

**3.** Method according to any of the preceding claims, **characterized in that,** when updating the transition probabilities, both the transition probabilities already stored in the Markov decision problem (20) and the transition probabilities determined on the basis of the actually occurring transitions are taken into account.

**4.** Method according to any of the preceding claims, **characterized in that** the updating of the transition probabilities and/or the addition of states (11) is carried out in the vehicle (50) or in the robot.

**5.** Method according to any of the preceding claims, **characterized in that** the updating of the transition probabilities is additionally or alternatively carried out on a backend server (60), the Markov decision problem (20) updated on the backend server (60) being transmitted to the vehicle (50) or the robot.

**6.** Method according to any of the preceding claims, **characterized in that** a transition probability for a transition into a state (11) is updated only if a predetermined minimum number of this transition into this state (11) has taken place during operation.

**7.** Apparatus (1) for supporting maneuver planning for a vehicle (50) driving in an at least partially automated manner, or a robot, comprising:

a maneuver support device (2), wherein the maneuver support device (2) is configured to describe a state space (11) of the surroundings of the vehicle (50) or the robot in discrete form by means of a predetermined Markov decision problem (20),
to support maneuver planning for the vehicle (50) or the robot, based on the Markov decision problem (20), by executing at least one optimization method, wherein optimal action values for discretized actions are determined by means of the at least one optimization method based on discrete states (11) in the state space (10), wherein a map (30) having states (10) in the state space (10) as input values and having action values for actions in the state space (10) as output values is learned and provided for maneuver planning,
to record actually occurring transitions between states (11) of the state space (10) during operation of the vehicle (50) or the robot, and to determine and update transition probabilities between the states (11) of the Markov decision problem (20) by evaluating a frequency of the recorded transitions.

**8.** Apparatus (1) according to claim 7, **characterized in that** the maneuver support device (2) is additionally or alternatively further configured to transmit the recorded transitions to a backend server (60) and to receive a Markov decision problem (20) updated by the backend server (60) from the backend server (60).

**9.** Backend server (60) for use with an apparatus (1) according to claim 8, comprising a data processing device (62), wherein the data processing device (62) is configured to receive, from at least one vehicle (60) or at least one robot according to claim 10 having at least one apparatus (1) according to claim 8, actually occurring transitions between states (11) of a state space (10) of a Markov decision problem (20) recorded during operation of the at least one vehicle (50) or the at least one robot, to determine and update transition probabilities between the states (11) of the Markov decision problem (20) by evaluating a frequency of the received recorded transitions, and to transmit the updated Markov decision problem (20) to at least one vehicle (50) or at least one robot.

**10.** Vehicle (50) or robot comprising at least one apparatus (1) according to claim 7 or 8.

**Revendications**

**1.** Procédé d'aide à la planification de manœuvre pour un véhicule (50) ou un robot se déplaçant de manière au moins partiellement automatisée,

dans lequel un espace d'état (10) d'un environnement du véhicule (50) ou du robot est décrit sous forme discrète par le biais d'un problème de décision de Markov (20) prédéfini, dans lequel une planification de manoeuvre pour le véhicule (50) ou le robot est assistée à partir du problème de décision de Markov (20) par l'exécution d'au moins un procédé d'optimisation, dans lequel des valeurs d'action optimales pour des actions discrétisées sont déterminées par le biais de l'au moins un procédé d'optimisation à partir d'états discrets (11) dans l'espace d'état (10), dans lequel une représentation (30) comportant des états (10) dans l'espace d'état (10) comme valeurs d'entrée et comportant des valeurs d'action pour des actions dans l'espace d'état (10) comme valeurs de sortie est apprise et mise à disposition pour une planification de manœuvre,

dans lequel, pendant un fonctionnement du véhicule (50) ou du robot, des transitions entre des états (11) de l'espace d'état (10) ayant lieu réellement sont enregistrées, et dans lequel, en évaluant une fréquence des transitions enregistrées, des probabilités de transition entre les états (11) du problème de décision de Markov (20) sont déterminées et mises à jour.

2. Procédé selon la revendication 1, **caractérisé en ce que,** lors du fonctionnement du véhicule (50) ou du robot, des transitions vers des états (11) qui ne sont pas contenus dans le problème de décision de Markov (20) sont en outre acquises et/ou reconnues, dans lequel ces états (11) acquis et/ou reconnus et les probabilités de transition associées sont ajoutés au problème de décision de Markov (20).

3. Procédé selon l'une des revendications précédentes,
   **caractérisé en ce que** lors de la mise à jour des probabilités de transition, à la fois les probabilités de transition déjà déposées dans le problème de décision de Markov (20) et les probabilités de transition déterminées à partir des transitions ayant lieu réellement sont prises en compte.

4. Procédé selon l'une des revendications précédentes,
   **caractérisé en ce que** la mise à jour des probabilités de transition et/ou l'ajout d'états (11) sont réalisés dans le véhicule (50) ou dans le robot.

5. Procédé selon l'une des revendications précédentes,
   **caractérisé en ce que** la mise à jour des probabilités de transition est réalisée en plus ou en variante sur un serveur dorsal (60), dans lequel le problème de décision de Markov (20) mis à jour sur le serveur dorsal (60) est transmis au véhicule (50) ou au robot.

6. Procédé selon l'une des revendications précédentes,
   **caractérisé en ce qu'**une probabilité de transition pour une transition vers un état (11) n'est mise à jour que si un nombre minimal prédéfini de cette transition vers cet état (11) a eu lieu pendant le fonctionnement.

7. Dispositif (1) d'aide à la planification de manœuvre pour un véhicule (50) ou un robot se déplaçant de manière au moins partiellement automatisée, comprenant :

   un équipement d'aide à la manœuvre (2), dans lequel l'équipement d'aide à la manœuvre (2) est conçu pour décrire un espace d'état (11) d'un environnement du véhicule (50) ou du robot sous forme discrète par le biais d'un problème de décision de Markov (20) prédéfini,

   pour assister une planification de manœuvre pour le véhicule (50) ou le robot à partir du problème de décision de Markov (20) par l'exécution d'au moins un procédé d'optimisation, dans lequel des valeurs d'action optimales pour des actions discrétisées sont déterminées par le biais de l'au moins un procédé d'optimisation à partir d'états discrets (11) dans l'espace d'état (10), dans lequel une représentation (30) comportant des états (10) dans l'espace d'état (10) comme valeurs d'entrée et comportant des valeurs d'action pour des actions dans l'espace d'état (10) comme valeurs de sortie est apprise et mise à disposition pour une planification de manœuvre,

   pour enregistrer des transitions entre des états (11) de l'espace d'état (10) ayant lieu réellement pendant un fonctionnement du véhicule (50) ou du robot, et pour déterminer et mettre à jour des probabilités de transition entre les états (11) du problème de décision de Markov (20) en évaluant une fréquence des transitions enregistrées.

8. Dispositif (1) selon la revendication 7, **caractérisé en ce que** l'équipement d'aide à la manœuvre (2) est en outre conçu, en plus ou en variante, pour transmettre les transitions enregistrées à un serveur dorsal (60) et pour recevoir du serveur dorsal (60) un problème de décision de Markov (20) mis à jour par le serveur dorsal (60).

9. Serveur dorsal (60) destiné à être utilisé avec un dispositif (1) selon la revendication 8, comprenant un équipement de traitement de données (62), dans lequel l'équipement de traitement de données (62) est conçu pour recevoir des transitions ayant lieu réellement enregistrées entre des états (11) d'un espace d'état (10) d'un problème de décision de Markov (20) à partir d'au moins un véhicule (60) ou d'au moins un robot selon la revendication 10 comportant au moins un dispositif (1) selon la revendication 8 pendant un fonctionnement de l'au moins un véhicule (50) ou de l'au moins un robot, pour déterminer et mettre à jour des probabilités de transition entre les états (11) du problème de décision de Markov (20) en évaluant une fréquence des transitions enregistrées reçues, et pour transmettre le problème de décision de Markov (20) mis à jour à au moins un véhicule (50) ou au moins un robot.

10. Véhicule (50) ou robot, comprenant au moins un dispositif (1) selon la revendication 7 ou 8.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200086863 A1
- CN 110562239 A